# FASCICULE DE BREVET EUROPEEN

(11) **EP 3 521 001 B1**
(45) Date de publication et mention de la délivrance du brevet: **20.10.2021**
(21) Numéro de dépôt: 19155571.3
(22) Date de dépôt: 05.02.2019
(51) Int. Cl.: B29C 70/18, B32B 5/26, B29C 51/14, B29C 70/46, B29C 70/22, B29K 105/08, B29K 101/12

(54) **PIÈCE PRÉIMPRÉGNÉE COMPRENANT UNE COUCHE PRINCIPALE ET UNE COUCHE DE RENFORT**
VORIMPRÄGNIERTES FASERVERBUNDTEIL UMFASSEND EINE HAUPTLAGE UND EINE VERSTÄRKUNGSLAGE
PREPREG PART COMPRISING A MAIN LAYER AND A REINFORCING LAYER

(30) Priorité: 05.02.2018 FR 1850941
(43) Date de publication de la demande: 07.08.2019
(73) Titulaire: Faurecia Systèmes d'Echappement, 92000 Nanterre (FR)
(72) Inventeur: RENAULT, Thierry, 35800 DINARD (FR)
(74) Mandataire: Lavoix

(56) Documents cités:
- DE-A1-102013 213 711
- DE-A1-102016 207 604

## Description

La présente invention concerne une pièce préimprégnée selon le préambule de la revendication 1.

Une pièce préimprégnée est par exemple décrite dans le document DE 10 2013 213711 A1.

Le document DE 10 2016 207604 divulgue le préambule de la revendication 1 et décrit un composant comprenant un matériau thermoplastique, des fibres et des sphères creuses destinées à former une structure en mousse.

On connaît de telles pièces du type précité, également connues sous le nom « d'organosheet ». Une telle pièce préimprégnée est destinée à être mise en forme, et éventuellement associée à d'autres pièces préimprégnées, pour fabriquer une pièce finie légère et présentant des propriétés mécaniques satisfaisantes par exemple par estampage et/ou surmoulage. Les pièces finies sont par exemple utilisées dans l'industrie automobile pour former des parties de caisse de véhicule, des panneaux de renfort ou de protection, des parties de sièges ou autre.

Une telle pièce ne donne cependant pas entière satisfaction. En effet, elle est fabriquée en continu en passant des bandes de fibres et des bandes de matériau thermoplastique entre des rouleaux chauffés pour que le matériau thermoplastique imprègne les fibres. Un tel procédé de fabrication dans une presse double bande permet de réaliser une bande préimprégnée de forme uniforme, d'épaisseur et de surface uniforme, qui n'est ainsi pas adaptée à la forme de la pièce finie à fabriquer. La bande doit ainsi être retravaillée en la découpant. La forme et l'épaisseur uniformes d'une telle pièce n'est pas non plus adaptée pour renforcer certaines parties de la pièce finie sans étapes additionnelles.

Un des buts de l'invention est de proposer une pièce préimprégnée prête à la réalisation d'une pièce finie comportant au moins une partie renforcée.

A cet effet, l'invention a pour objet une pièce préimprégnée selon la partie caractérisante de la revendication 1.

En fabriquant la pièce préimprégnée à partir d'un complexe principal et d'un complexe de renfort, la forme, la surface et les caractéristiques mécaniques de la pièce préimprégnée sont rendues hautement modulables en adaptant les caractéristiques des complexes, telles que leur forme, leur épaisseur et/ou leur surface, aux caractéristiques souhaitées de la pièce préimprégnée. On obtient ainsi une pièce préimprégnée présentant des caractéristiques, telles que sa forme et sa surface, la rapprochant de la pièce finie à fabriquer. Ainsi, il n'est pas nécessaire de retravailler la pièce préimprégnée avant de fabriquer la pièce finie à partir de cette pièce préimprégnée.

Selon des modes de réalisation particuliers de l'invention, la pièce préimprégnée présente en outre l'une ou plusieurs des caractéristiques des revendications 2 à 9, prise(s) isolément ou suivant toute(s) combinaison(s) techniquement possible(s).

L'invention concerne également l'utilisation de la pièce préimprégnée décrite ci-dessus, selon la revendication 10.

D'autres caractéristiques et avantages de l'invention apparaîtront à la lecture de la description qui va suivre, donnée uniquement à titre d'exemple et faite en se référant aux dessins annexés, dans lesquels :
- la Figure 1 est une vue du dessus d'une pièce préimprégnée selon l'invention ;
- la Figure 2 est une vue en coupe suivant la ligne A - A' de la Figure 1 des couches du complexe principal et du complexe de renfort avant l'imprégnation des fibres par le matériau thermoplastique pour obtenir la pièce préimprégnée ; et
- la Figure 3 est une vue en coupe d'une pièce préimprégnée obtenue à partir de l'empilement représenté sur la Figure 2.

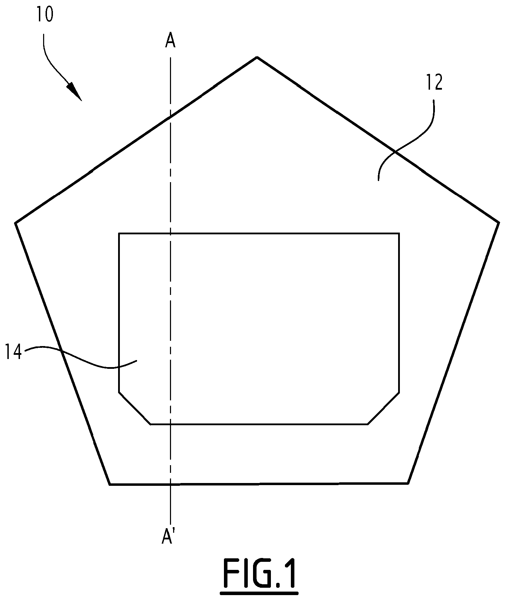

En référence à la Figure 1, on décrit une pièce préimprégnée 10 destinée à fabriquer une pièce finie en matériau composite. Une telle pièce préimprégnée 10 est également connue sous le nom « d'organosheet ».

La pièce préimprégnée 10 se présente sous la forme d'une plaque sensiblement plane présentant une forme correspondant à au moins une partie de la forme de la pièce finie à fabriquer à partir de la pièce préimprégnée 10 mise à plat.

La pièce préimprégnée 10 est destinée à réaliser une pièce finie, par exemple tridimensionnelle, par thermoestampage et/ou surmoulage. Le thermoestampage consiste à positionner la pièce préimprégnée 10, et éventuellement d'autres pièces préimprégnées, dans une presse chauffée, la presse étant agencée pour imprimer la forme de la pièce finie à la pièce préimprégnée 10. Le surmoulage consiste à positionner la pièce préimprégnée 10, éventuellement mise en forme dans une presse, dans une cavité de moulage présentant la forme de la pièce finie à réaliser et à injecter un matériau de moulage dans la cavité autour de la pièce préimprégnée 10 pour réaliser la pièce finie.

L'épaisseur de la pièce préimprégnée 10 est comprise entre 0,5 et 10 mm, de préférence entre 0,5 mm et 5 mm, et encore plus préférentiellement entre 0,5 et 2 mm.

La pièce imprégnée 10 comprend une couche principale 12 et une couche de renfort 14.

La surface de la couche principale 12 est inférieure à la surface développée de la pièce finie à fabriquer à partir de la pièce préimprégnée 10. Ainsi, la pièce préimprégnée 10 présente une forme et une surface adaptée à la réalisation de la pièce finie souhaitée sans nécessiter de redécouper la pièce préimprégnée 10. En d'autres termes, la pièce préimprégnée 10 est «prête à l'emploi » et peut être utilisée sans modification pour fabriquer la pièce finie souhaitée.

Avantageusement, la couche principale 12 présente une forme non rectangulaire correspondant à au moins une partie de la forme de la pièce finie mise à plat.

La couche principale 12 présente une épaisseur différente de celle de la couche de renfort 14.

La couche de renfort 14 est fixée sur au moins une partie de la couche principale 12.

Selon un mode de réalisation représenté sur la Figure 1, la couche de renfort 14 présente une aire surfacique différente de celle de la couche principale 12. Avantageusement, l'aire surfacique de la couche de renfort 14 est inférieure à l'aire surfacique de la couche principale 12. La couche de renfort 14 est ainsi positionnée sur une zone localisée de la couche principale 12 dans laquelle des propriétés mécaniques renforcées sont souhaitées. En d'autres termes, la pièce préimprégnée 10 présente des caractéristiques mécaniques différentes dans la zone de la couche principale 12 non recouverte par la couche de renfort 14 et dans la zone de la couche principale 12 recouverte par la couche de renfort 14.

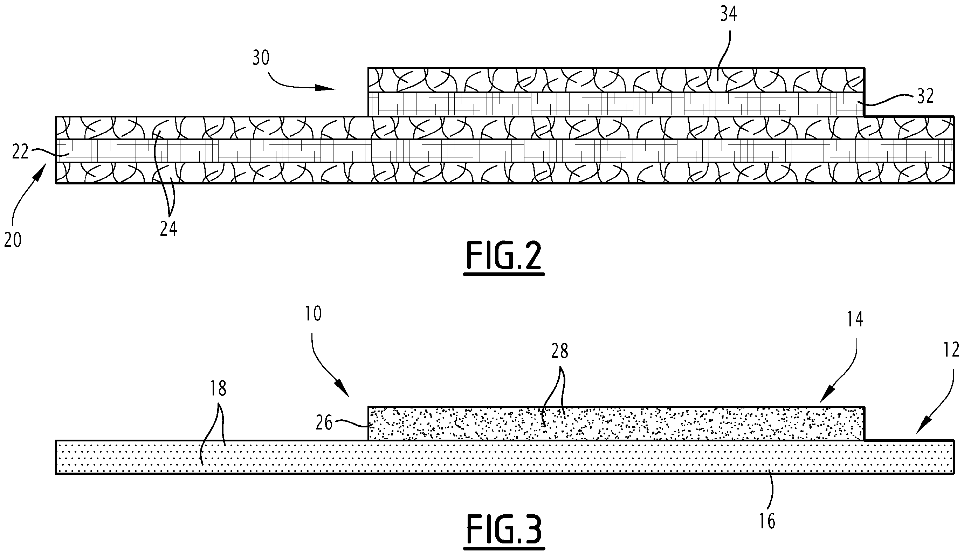

En référence à la Figure 3, la couche principale 12 est en un premier matériau composite comportant une première matrice 16 en matériau thermoplastique, et des premières fibres de renfort 18 noyées dans la première matrice 16.

Comme visible sur la Figure 2, la couche principale 12 est obtenue à partir d'un complexe principal 20. Le complexe principal 20 comporte au moins une première couche de fibres 22, et au moins une première couche de matrice 24 comprenant le matériau thermoplastique.

De manière similaire, en référence à la Figure 3, la couche de renfort 14 est en un deuxième matériau composite comportant une deuxième matrice 26 en matériau thermoplastique, et des deuxièmes fibres de renfort 28 noyées dans la deuxième matrice 26.

Comme visible sur la Figure 2, la couche de renfort 14 est obtenue à partir d'un complexe de renfort 30. Le complexe de renfort 30 comporte au moins une deuxième couche de fibres 32, et au moins une deuxième couche de matrice 34 comprenant le matériau thermoplastique.

Avantageusement, dans le complexe principal 20 et/ou le complexe de renfort 30, au moins deux couches de matrice 24, 34 s'étendent de part et d'autre d'au moins une couche de fibres 22, 32.

Avantageusement, le complexe principal 20 et/ou le complexe de renfort 30 comportent au moins deux couches de fibres 22, 32, chaque couche de fibres 22, 32 s'étendant entre une couche de matrice 24, 34 sur sa première face et une couche de matrice 24, 34 sur sa deuxième face.

Les premières et deuxièmes fibres de renfort 18, 28 sont par exemple des fibres de verre, ou des fibres de carbone, des fibres aramides, des fibres de basalte, des fibres naturelles ou autres. Les premières et deuxièmes fibres de renfort 18, 28 peuvent également être un mélange de ces fibres. Selon un mode de réalisation, les premières fibres de renfort 18 du premier matériau composite sont de même nature que les deuxièmes fibres de renfort 28 du deuxième matériau composite. En variante, les premières et deuxièmes fibres de renfort 18, 28 sont différentes.

Les premières et deuxièmes fibres de renfort 18, 28 respectivement noyées dans les première et deuxième matrices 16, 26 sont issues des première(s) et deuxième(s) couches de fibres 22, 32 comprenant des premières et deuxièmes fibres de renfort 18, 28.

Selon un mode de réalisation de l'invention, l'armure des premières fibres de renfort 18 dans la couche principale 12 est différente de celle des deuxièmes fibres de renfort 28 dans la couche de renfort 14. C'est-à-dire que les premières fibres de renfort 18 de la première couche de fibre 22 sont tissées différemment des deuxièmes fibres de renfort 28 de la deuxième couche de fibres 32.

Selon un mode de réalisation, les première et deuxième couches de fibres 22, 32 présentent des fibres continues tissées, des fibres multiaxiales (« *Non Crimp Fabric* » en anglais), ou des couches en fibres présentant des orientations aléatoires. Avantageusement, les couches de fibres 22, 32 présentent au moins deux orientations différentes de fibres, ce qui permet d'améliorer les caractéristiques mécaniques de la pièce préimprégnée 10 dans toutes les directions de celle-ci. Selon un mode de réalisation de l'invention, les premières fibres de renfort 18 de la couche principale 12 présentent une orientation différente des deuxièmes fibres de renfort 28 de la couche de renfort 14.

Le grammage des première et deuxième couches de fibres 22, 32 est par exemple compris entre 100 et 1000 g/m², de préférence entre 300 et 800 g/m², encore plus préférentiellement entre 500 et 700 g/m², et est avantageusement sensiblement égal à 600 g/m².

De telles fibres sont choisies pour renforcer la pièce finie, ce qui permet par exemple de réduire son épaisseur, tout en conservant des propriétés mécaniques satisfaisantes. Ainsi, la pièce finie en matériau composite est allégée par rapport à une pièce réalisée uniquement en matériau thermoplastique, tout en présentant des propriétés mécaniques identiques, voire améliorées.

Le matériau thermoplastique est par exemple le polytéréphtalate d'éthylène (PET). Le PET présente l'avantage d'être peu coûteux par rapport aux matériaux thermoplastiques généralement utilisés pour réaliser la matrice de pièces en matériau composite. D'autres matériaux thermoplastiques sont également possibles tels que par exemple le polypropylène, le polyamide 6, le polyamide 66, le polytéréphtalate de butylène (PBT), et autres. Le matériau thermoplastique peut être sous forme d'un non tissé ou d'un film. Dans le cas d'un non tissé, l'épaisseur de la première couche de matrice 24 et de la deuxième couche de matrice 34 avant la réalisation de la pièce préimprégnée 10 est supérieure ou égale à 1 mm, de préférence entre 1 et 5 mm, et encore plus préférentiellement entre 2 et 3 mm. Dans le cas d'un film, l'épaisseur de la première couche de matrice 24 et de la deuxième couche de matrice 34 avant la réalisation de la pièce préimprégnée 10 est comprise entre 100 et 1000 µm, de préférence entre 150 et 500 µm, et encore plus préférentiellement entre 200 et 300 µm.

Le grammage des première(s) et deuxième(s) couches de matrice 24, 34 est par exemple compris entre 100 et 700 g/m², de préférence entre 200 et 500 g/m², et est avantageusement sensiblement égal à 300 g/m².

Selon un premier mode de réalisation, les première(s) et deuxième(s) couches de matrice 24, 34 sont formées uniquement de matériau thermoplastique et les première(s) et deuxième(s) couches de fibre 22, 32 sont formées uniquement de fibres de renfort.

Selon un deuxième mode de réalisation, chaque couche de matrice 24, 34 comprend de 10 à 100% en poids de matériau thermoplastique et de 0 à 90% en poids de fibres de renfort, et chaque couche de fibres 22, 32 comprend de 10 à 100% en poids de fibres de renfort et de 0 à 90% en poids de matériau thermoplastique.

De préférence, chaque couche de matrice 24, 34 comprend de 50 à 80% en poids de matériau thermoplastique et de 20 à 50% en poids de fibres de renfort, et chaque couche de fibre 22, 32 comprend de 60 à 90% en poids de fibres de renfort et de 10 à 40% en poids de matériau thermoplastique.

Selon un troisième mode de réalisation, les première et/ou deuxième couches de matrice 24, 34 et/ou les première et/ou deuxième couches de fibres 22, 32 sont des semi-imprégnés comprenant un mélange des fibres thermoplastiques en PET et des fibres de renfort, tel qu'un tissu de fibres comélées de fibres de renfort et de fibres de matériau thermoplastique, ou un tissu cotissé de fibres de renfort et de fibres de matériau thermoplastique. Dans le cas du tissu de fibres comélées et du tissu cotissé, les fibres de matériau thermoplastique constituent au moins 10%, avantageusement de 30% à 60%, en poids de première(s) et/ou deuxième(s) couches de matrice 24, 34. Dans le cas du tissu de fibres comélées et du tissu cotissé, les fibres de matériau thermoplastique constituent au moins 10%, avantageusement de 30% à 60%, en poids de première(s) et/ou deuxième(s) couches de fibre 22, 32.

Avantageusement, au moins une couche dans le complexe principal 20 présente une épaisseur différente d'au moins une couche dans le complexe de renfort 30. Ceci permet de varier les propriétés mécaniques de la couche principale 12 par rapport à la couche de renfort 14 dans la pièce préimprégnée 10. Selon un mode de réalisation de l'invention, l'épaisseur de première(s) couche(s) de fibres 22 est différente de celle de deuxième(s) couche(s) de fibres 32, et/ou l'épaisseur de première(s) couche(s) de matrice 24 est différente de celle de deuxième(s) couche(s) de matrice 34.

Avantageusement, les couches du complexe principal 20 sont jointes entre elles au moins ponctuellement, et/ou les couches du complexe de renfort 30 sont jointes entre elles au moins ponctuellement, et/ou le complexe principal 20 et le complexe de renfort 30 sont joints entre eux au moins ponctuellement. Ce mode avantageux permet une meilleure solidarisation des couches du complexe principal 20 et/ou des couches du complexe de renfort 30 et/ou du complexe principal 20 par rapport au complexe de renfort 30 et de faciliter la manutention des couches pour l'imprégnation afin d'obtenir la pièce préimprégnée 10.

Selon un mode de réalisation de l'invention, l'ensemble de la couche principale 12 et de la couche de renfort 14 est constitué de couches empilées dans l'ordre suivant : couche de fibres, couche de matrice, couche de matrice, couche de fibres, couche de matrice, couche de matrice, couche de fibres. Selon un autre mode de réalisation de l'invention, l'ensemble de la couche principale 12 et de la couche de renfort 14 est constitué de couches empilées dans l'ordre suivant : couche de fibres, couche de matrice, couche de matrice, couche de fibres, couche de matrice, couche de fibres, couche de matrice, couche de matrice, couche de fibres. Selon un autre mode de réalisation de l'invention, l'ensemble de la couche principale 12 et de la couche de renfort 14 est constitué de couches empilées dans l'ordre suivant : couche de matrice, couche de fibres, couche de matrice, couche de fibres, couche de matrice, couche de fibres, couche de matrice. Il est entendu que le nombre et l'ordre des couches peuvent varier selon les propriétés souhaitées de la pièce préimprégnée 10 et/ou de la pièce finie à réaliser.

Le fait d'avoir un premier matériau composite de même nature que le deuxième matériau composite, notamment en choisissant un matériau identique pour réaliser la première couche de matrice 24 et la deuxième couche de matrice 34, permet d'améliorer la cohésion de la pièce préimprégnée 10 lors de la réalisation de celle-ci, les matériaux de ces couches se mêlant l'un à l'autre au cours de l'imprégnation des fibres. Cependant, en variante, la première couche de matrice 24 peut être réalisée en un matériau différent de la deuxième couche de matrice 34.

La pièce préimprégnée 10 est obtenue en disposant l'empilement du complexe principal 20 et du complexe de renfort 30 dans un outil de réalisation chauffé à une température supérieure à la température de fusion du matériau thermoplastique des première et deuxième couches de matrice 24, 34 et en appliquant une pression sur l'empilement de sorte que le matériau thermoplastique fondu imprègne les fibres des première et deuxième couches de fibres 22, 32 et de sorte à ce que les couches principale et de renfort 12, 14 se solidarisent l'une à l'autre. Les complexes principale 20 et de renfort 30 sont par exemple préalablement découpés à la forme et à la surface voulues. Les complexes principal 20 et de renfort 30 sont ensuite consolidés dans un moule à une température inférieure à la température de fusion du matériau thermoplastique.

Grâce à l'invention décrite ci-dessus, la fabrication de la pièce finie est simplifiée. En particulier, la pièce préimprégnée 10 comportant la couche de renfort 14 configurée pour renforcer certaines parties de la pièce finie, il ne reste qu'une étape de mise en forme de la pièce préimprégnée 10 et éventuellement une étape de surmoulage pour fabriquer la pièce finie présentant les parties renforcées adaptées, sans recourir à des étapes supplémentaires compliquées d'adaptation de la pièce préimprégnée 10 à la pièce finie à réaliser.

Ainsi, la forme non rectangulaire de la couche principale 12 correspondant à la forme mise à plat d'au moins une partie de la pièce finie permet de se passer d'un découpage de la pièce préimprégnée 10, ce qui réduit le temps de fabrication de pièces finies.

Par ailleurs, la pièce préimprégnée 10 décrite ci-dessus présente des propriétés mécaniques satisfaisantes. En effet, la pièce préimprégnée 10 possède par exemple un module en flexion supérieur à 20 GPa et une contrainte à la rupture en flexion supérieure à 400 MPa.

## Revendications

1. Pièce préimprégnée (10), utilisable de façon thermoplastique, et destinée à la fabrication d'une pièce finie en matériau composite, la pièce préimprégnée (10) comprenant :
- une couche principale (12) en un premier matériau composite comportant une première matrice (16) en matériau thermoplastique et des premières fibres de renfort (18) noyées dans la première matrice (16), la couche principale (12) étant obtenue à partir d'un complexe principal (20) comportant au moins une première couche de fibres (22) comprenant au moins les premières fibres de renfort (18) et au moins une première couche de matrice (24) comprenant le matériau thermoplastique,
- une couche de renfort (14) en un deuxième matériau composite comportant une deuxième matrice (26) en matériau thermoplastique et des deuxièmes fibres de renfort (28) noyées dans la deuxième matrice (26), la couche de renfort (14) étant obtenue à partir d'un complexe de renfort (30) comportant au moins une deuxième couche de fibres (32) comprenant au moins les deuxièmes fibres de renfort (28) et au moins une deuxième couche de matrice (34) comprenant le matériau thermoplastique, ladite couche de renfort (14) étant fixée sur au moins une partie de la couche principale (12),
la pièce préimprégnée (10) présentant la forme mise à plat d'au moins une partie de la pièce finie à fabriquer à partir de ladite pièce préimprégnée (10), **caractérisée en ce que** la surface de la couche principale (12) est inférieure à la surface développée de la pièce à fabriquer.

2. Pièce préimprégnée (10) selon la revendication 1, dans laquelle la couche de renfort (14) présente une aire surfacique différente de celle de la couche principale (12).

3. Pièce préimprégnée (10) selon la revendication 1 ou 2, dans laquelle la couche principale (12) présente une épaisseur différente de celle de la couche de renfort (14).

4. Pièce préimprégnée (10) selon l'une quelconque des revendications précédentes, dans laquelle l'armure des premières fibres de renfort (18) dans la couche principale (12) est différente de celle des deuxièmes fibres de renfort (28) dans la couche de renfort (14).

5. Pièce préimprégnée (10) selon l'une quelconque des revendications précédentes, dans laquelle, dans le complexe principal (20) et/ou le complexe de renfort (30), au moins deux couches de matrice (24, 34) s'étendent de part et d'autre d'au moins une couche de fibres (22, 32).

6. Pièce préimprégnée (10) selon l'une quelconque des revendications précédentes, dans laquelle le complexe principal (20) et/ou le complexe de renfort (30) comportent au moins deux couches de fibres (22, 32), chaque couche de fibres (22, 32) s'étendant entre une couche de matrice (24, 34) sur sa première face et une couche de matrice (24, 34) sur sa deuxième face.

7. Pièce préimprégnée (10) selon l'une quelconque des revendications précédentes, dans laquelle les premières fibres de renfort (18) de la couche principale (12) présentent une orientation différente des deuxièmes fibres de renfort (28) de la couche de renfort (14).

8. Pièce préimprégnée (10) selon l'une quelconque des revendications précédentes, dans laquelle le grammage de la première couche de matrice (24) et/ou de la deuxième couche de matrice (34) est compris entre 100 et 700 g/m², et dans laquelle l'épaisseur de la pièce préimprégnée (10) est comprise entre 0,5 et 10 mm.

9. Pièce préimprégnée (10) selon l'une quelconque des revendications précédentes, dans laquelle :
- les couches de fibres (22) et de matrice (24) du complexe principal (20) sont jointes entre elles au moins ponctuellement, et/ou
- les couches de fibres (32) et de matrice (34) du complexe de renfort (30) sont jointes entre elles au moins ponctuellement, et/ou
- le complexe principal (20) et le complexe de renfort (30) sont joints entre eux au moins ponctuellement.

10. Utilisation de la pièce préimprégnée (10) en matériau composite selon l'une quelconque des revendications précédentes pour réaliser au moins une pièce finie par thermoestampage et/ou surmoulage.

## Patentansprüche

1. Prepreg-Teil (10) zur thermoplastischen Verwendung um bestimmt zur Herstellung eines Fertigteils aus Verbundmaterial, das Prepreg-Teil (10) umfassend:
- eine Hauptschicht (12) aus einem ersten Verbundmaterial, umfassend eine erste Matrix (16) aus thermoplastischem Material und erste Verstärkungsfasern (18), die in die erste Matrix (16) eingebettet sind, wobei die Hauptschicht (12) aus einem Hauptkomplex (20) erlangt wird, umfassend mindestens eine erste Faserschicht (22), umfassend mindestens die ersten Verstärkungsfasern (18) und mindestens eine erste Matrixschicht (24), umfassend das thermoplastische Material,
- eine Verstärkungsschicht (14) aus einem zweiten Verbundmaterial, umfassend eine zweite Matrix (26) aus thermoplastischem Material und zweite Verstärkungsfasern (28), die in die zweite Matrix (26) eingebettet sind, wobei die Verstärkungsschicht (14) aus einem Verstärkungskomplex (30) erlangt wird, umfassend mindestens eine zweite Faserschicht (32), umfassend mindestens die zweiten Verstärkungsfasern (28), und mindestens eine zweite Matrixschicht (34), umfassend das thermoplastische Material, wobei die Verstärkungsschicht (14) an mindestens einem Abschnitt der Hauptschicht (12) befestigt ist,
das Prepreg-Teil (10) die abgeflachte Form von mindestens einem Abschnitt des aus dem Prepreg-Teil (10) herzustellenden Fertigteils aufweist, **dadurch gekennzeichnet, dass**
die Oberfläche der Hauptschicht (12) kleiner ist als die Umfangsfläche des herzustellenden Teils.

2. Prepreg-Teil (10) nach Anspruch 1, wobei die Verstärkungsschicht (14) eine andere Oberfläche als die Hauptschicht (12) aufweist.

3. Prepreg-Teil (10) nach Anspruch 1 oder 2, wobei die Hauptschicht (12) eine Stärke aufweist, die sich von der der Verstärkungsschicht (14) unterscheidet.

4. Prepreg-Teil (10) nach einem der vorherigen Ansprüche, wobei sich die Bindung der ersten Verstärkungsfasern (18) in der Hauptschicht (12) von jener der zweiten Verstärkungsfasern (28) in der Verstärkungsschicht (14) unterscheidet.

5. Prepreg-Teil (10) nach einem der vorherigen Ansprüche, wobei sich in dem Hauptkomplex (20) und/oder in dem Verstärkungskomplex (30) mindestens zwei Matrixschichten (24, 34) zu beiden Seiten von mindestens einer Faserschicht (22, 32) erstrecken.

6. Prepreg-Teil (10) nach einem der vorherigen Ansprüche, wobei der Hauptkomplex (20) und/oder der Verstärkungskomplex (30) mindestens zwei Faserschichten (22, 32) umfassen, wobei sich jede Faserschicht (22, 32) zwischen einer Matrixschicht (24, 34) auf ihrer ersten Seite und einer Matrixschicht (24, 34) auf ihrer zweiten Seite erstreckt.

7. Prepreg-Teil (10) nach einem der vorherigen Ansprüche, wobei die ersten Verstärkungsfasern (18) der Hauptschicht (12) eine andere Ausrichtung als die zweiten Verstärkungsfasern (28) der Verstärkungsschicht (14) aufweisen.

8. Prepreg-Teil (10) nach einem der vorherigen Ansprüche, wobei das Grammgewicht der ersten Matrixschicht (24) und/oder der zweiten Matrixschicht (34) zwischen 100 und 700 g/m² ist, und wobei die Stärke des Prepreg-Teils (10) zwischen 0,5 und 10 mm ist.

9. Prepreg-Teil (10) nach einem der vorherigen Ansprüche, wobei:
- die Faser- (22) und die Matrixschicht (24) des Hauptkomplexes (20) mindestens stellenweise miteinander verbunden sind, und/oder
- die Faser- (32) und die Matrixschicht (34) des Verstärkungskomplexes (30) mindestens stellenweise miteinander verbunden sind, und/oder
- der Hauptkomplex (20) und der Verstärkungskomplex (30) mindestens stellenweise miteinander verbunden sind.

10. Verwendung des Prepreg-Teils (10) aus Verbundmaterial nach einem der vorherigen Ansprüche zur Herstellung mindestens eines Fertigteils durch Thermostanzen und/oder Umspritzen.

## Claims

1. A pre-impregnated part (10), usable in a thermoplastic manner, and intended to manufacture a finished part made from composite material, the pre-impregnated part (10) comprising:
- a main layer (12) made from a first composite material including a first matrix (16) made from a thermoplastic material and first reinforcing fibers (18) embedded in the first matrix (16), the main layer (12) being obtained from a main complex (20) including at least a first layer of fibers (22) comprising at least the first reinforcing fibers (18) and at least a first layer of matrix (24) comprising the thermoplastic material,
- a reinforcing layer (14) made from a second composite material including a second matrix (26) made from a thermoplastic material and second reinforcing fibers (28) embedded in the second matrix (26), the reinforcing layer (14) being obtained from a reinforcing complex (30) including at least a second layer of fibers (32) comprising at least the second reinforcing fibers (28) and at least a second matrix layer (34) comprising the thermoplastic material, said reinforcing layer (14) being fastened on at least a portion of the main layer (12),
the pre-impregnated part (10) having the flattened shape of at least a portion of the finished part to be manufactured from said pre-impregnated part (10),
**characterised in that** the surface of the main layer (12) is smaller than the developed surface of the part to be manufactured.

2. The pre-impregnated part (10) according to claim 1, wherein the reinforcing layer (14) has a surface area different from that of the main layer (12).

3. The pre-impregnated part (10) according to claim 1 or 2, wherein the main layer (12) has a thickness different from that of the reinforcing layer (14).

4. The pre-impregnated part (10) according to any one of the preceding claims, wherein the weave of the first reinforcing fibers (18) in the main layer (12) is different from that of the second reinforcing fibers (28) in the reinforcing layer (14).

5. The pre-impregnated part (10) according to any one of the preceding claims, wherein, in the main complex (20) and/or the reinforcing complex (30), at least two matrix layers (24, 34) extend on either side of at least one layer of fibers (22, 32).

6. The pre-impregnated part (10) according to any one of the preceding claims, wherein the main complex (20) and/or the reinforcing complex (30) include at least two layers of fibers (22, 32), each layer of fibers (22, 32) extending between a matrix layer (24, 34) on its first face and a matrix layer (24, 34) on its second face.

7. The pre-impregnated part (10) according to any one of the preceding claims, wherein the first reinforcing fibers (18) of the main layer (12) have a different orientation from the second reinforcing fibers (28) of the reinforcing layer (14).

8. The pre-impregnated part (10) according to any one of the preceding claims, wherein the grammage of the first matrix layer (24) and/or the second matrix layer (34) is comprised between 100 and 700 g/m², and wherein the thickness of the pre-impregnated part (10) is comprised between 0.5 and 10 mm.

9. The pre-impregnated part (10) according to any one of the preceding claims, wherein:
- the layers of fibers (22) and matrix (24) of the main complex (20) are joined between one another at least punctually, and/or
- the layers of fibers (32) and matrix (34) of the reinforcing complex (30) are joined between one another at least punctually, and/or
- the main complex (20) and the reinforcing complex (30) are joined between one another at least punctually.

10. A use of the pre-impregnated part (10) made from composite material according to any one of the preceding claims to manufacture at least one finished part by thermo-stamping and/or over-molding.
